# DEMANDE DE BREVET EUROPEEN

(11) **EP 4 382 785 A1**
(43) Date de publication de la demande: **12.06.2024**
(21) Numéro de dépôt: 23213507.9
(22) Date de dépôt: 30.11.2023
(51) Int. Cl.: F16K 15/14, F16K 27/02, B60S 1/00, B60S 1/48

(54) **CLAPET ANTI-RETOUR**

(30) Priorité: 08.12.2022 FR 2212949
(71) Demandeur: AKWEL, 01410 Champfromier (FR)
(72) Inventeur: BONDRAN, Christophe, 26240 SAINT-JEAN-DE-GALAURE (FR)
(74) Mandataire: Martin, Marie-Aude

(57) **Abrégé**

Ce clapet anti-retour (10) comprend un boîtier (12) délimitant un volume interne (18) muni d'une entrée (14), d'une sortie (16), une membrane (100), s'étendant au moins partiellement à l'intérieur du volume interne (18) du boîtier (12), la membrane (100) ayant une partie de contact (102) élastiquement déformable radialement entre une position d'étanchéité dans laquelle la partie de contact (102) vient en contact avec une paroi interne du volume interne (18) et une position d'ouverture fluidique dans laquelle le fluide peut s'écouler de l'entrée (14) vers la sortie (16) autour de la membrane (100). La membrane (100) présentant axialement une section transversale décroissante, le boîtier (12) comprend du côté de l'entrée (14) un siège interne (50) de réception de la partie distale (104) et du côté de la sortie (16), un picot (60) d'extension axiale configuré pour s'étendre à l'intérieur de la partie proximale (102) de la membrane (100) de telle sorte que la membrane (100) est immobilisée axialement entre le siège (50) et le picot (60).

## Description

### Domaine technique.

La présente invention concerne un clapet anti-retour pour un circuit de fluide d'un véhicule automobile. Elle s'applique plus particulièrement mais non exclusivement à un dispositif de pulvérisation pour distribuer du liquide de lavage sur une surface vitrée d'un véhicule automobile comprenant un tel clapet.

De façon connue en soi, un dispositif de pulvérisation sert à distribuer du liquide de lavage sur une surface vitrée, tel que par exemple le pare-brise ou la lunette arrière d'un véhicule automobile ou encore une surface vitrée d'un phare, d'un radar ou d'une caméra du véhicule automobile.

En général, un tel dispositif de pulvérisation comprend un clapet anti-retour qui se présente généralement sous la forme d'un boîtier comprenant une entrée et une sortie et un logement interne s'étendant entre l'entrée et la sortie à l'intérieur duquel s'étend au moins partiellement un élément de membrane. L'élément de membrane est configuré pour permettre l'écoulement de liquide de l'entrée vers la sortie, mais empêche sensiblement le retour du liquide de la sortie vers l'entrée.

En fonctionnement, le clapet permet d'empêcher le reflux total du liquide de lavage vers l'entrée ce qui permet de maintenir une certaine quantité de liquide de lavage résiduelle en sortie, par exemple au niveau d'une buse de pulvérisation, à disposition pour une prochaine utilisation du dispositif de pulvérisation. Lorsqu'un utilisateur du dispositif active le dispositif de pulvérisation, le liquide de lavage résiduel en sortie permet un amorçage plus rapide de la pulvérisation et donc un temps de réponse plus court.

### Technique antérieure.

On connaît déjà de l'art antérieur, notamment du brevet FR 3 056 179 B1 un dispositif de pulvérisation d'un liquide de lavage sur une vitre d'un véhicule automobile comprenant une unité de soupape.

Cette unité de soupape comprend un élément de membrane en élastomère et un ressort hélicoïdal de compression qui sollicite l'élément de membrane avec une force opposée à celle générée par la pression du liquide de lavage. Le dispositif décrit dans ce brevet est relativement complexe.

L'invention a notamment pour but de fournir un clapet anti-retour simplifié avec un nombre de pièces limité afin de réduire les coûts et d'améliorer la robustesse du clapet.

### Résumé de l'invention

A cet effet, l'invention a pour objet un clapet anti-retour pour un circuit de fluide d'un véhicule automobile, comprenant un boîtier délimitant un volume interne muni d'une entrée, d'une sortie et définissant un axe principal X d'écoulement du fluide entre l'entrée et la sortie au travers du boîtier, un élément de membrane, s'étendant au moins partiellement à l'intérieur du volume interne du boîtier, l'élément de membrane ayant une partie de contact élastiquement déformable radialement entre une position d'étanchéité dans laquelle la partie de contact vient en contact avec une paroi interne du volume interne et une position d'ouverture fluidique dans laquelle le fluide peut s'écouler de l'entrée vers la sortie autour de l'élément de membrane, caractérisé en ce que l'élément de membrane présentant axialement une section transversale décroissante entre une partie d'extrémité proximale formant la partie de contact et une partie d'extrémité distale opposée, le boîtier comprend du côté de l'entrée un siège interne de réception de la partie distale et du côté de la sortie un picot d'extension axiale configuré pour s'étendre à l'intérieur de la partie proximale de l'élément de membrane de telle sorte que l'élément de membrane est immobilisé axialement entre le siège et le picot.

Grâce au clapet de l'invention, le nombre de pièces peut être limité à trois pièces ce qui permet de réduire les coûts de fabrication et de montage.

Un clapet selon l'invention peut comprendre l'une ou plusieurs des caractéristiques suivantes.

Dans un mode de réalisation préféré de l'invention, le boîtier comprend un connecteur d'entrée et un connecteur de sortie configurés pour s'emmancher l'un dans l'autre en délimitant le volume interne du boîtier, le connecteur d'entrée comprend le siège et le connecteur de sortie comprend le picot.

Dans un mode de réalisation préféré de l'invention, le siège est intégré au connecteur d'entrée et le picot est intégré au connecteur de sortie, par exemple en étant chacun venu de matière par moulage d'une matière plastique.

Dans un mode de réalisation préféré de l'invention, la partie proximale de l'élément de membrane est de section transversale creuse pour former un évidement conformé pour recevoir axialement le picot conférant un profil à section longitudinale en forme générale de V.

Dans un mode de réalisation préféré de l'invention, la partie distale de l'élément de membrane est de section transversale pleine, par exemple la partie distale avec un embout d'extrémité avec une forme générale conique.

Dans un mode de réalisation préféré de l'invention, l'élément de membrane a une forme générale de cloche qui s'évase depuis la partie distale jusqu'à la partie proximale.

Dans un mode de réalisation préféré de l'invention, le picot comprend une base venue de matière avec une paroi interne du volume interne du boîtier, la base ayant une configuration en forme d'étoile, en particulier avec une pluralité de bras d'extension principalement radiale à espacement égal pour permettre l'écoulement de fluide autour de la base du picot.

Dans un mode de réalisation préféré de l'invention, le siège comprend une surface d'appui axial circonférentielle et la partie distale comprend un épaulement périphérique extérieur qui vient reposer axialement contre la surface d'appui.

Dans un mode de réalisation préféré de l'invention, le siège comprend une pluralité de nervures axiales, en saillie radiale depuis une paroi axiale du volume interne, pourvues chacune d'un bord d'extrémité proximale qui forment ensemble une surface d'appui circonférentielle discontinue pour la partie distale de l'élément de membrane.

Dans un mode de réalisation préféré de l'invention, la répartition des nervures est régulière selon la direction circonférentielle.

Dans un mode de réalisation préféré de l'invention, chaque connecteur femelle ou mâle est réalisé dans une matière plastique, par exemple par moulage par injection de la matière plastique.

L'invention a encore pour objet un dispositif de pulvérisation pour distribuer de l'eau de lavage sur une surface vitrée d'un véhicule automobile comprenant un clapet anti-retour caractérisé en ce que le clapet est selon l'invention.

### Brève description des dessins

D'autres caractéristiques et avantages de l'invention apparaîtront à la lumière de la description qui suit, faite en référence aux dessins annexes dans lesquels :
**Fig.1**

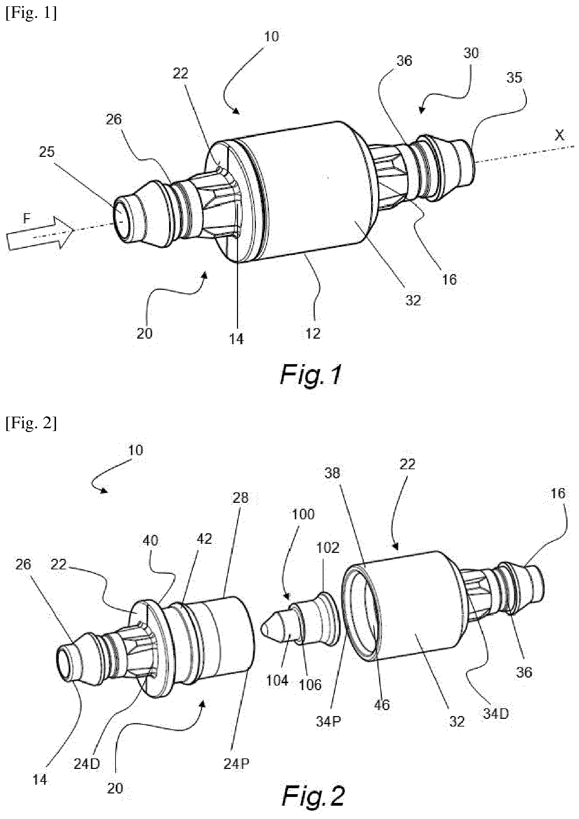

   [Fig.1] représente une vue en perspective d'un clapet selon l'invention dans une configuration assemblée ;
**Fig.2**
   [Fig.2] représente une vue en perspective éclatée du clapet de la [Fig.1];
**Fig.3**

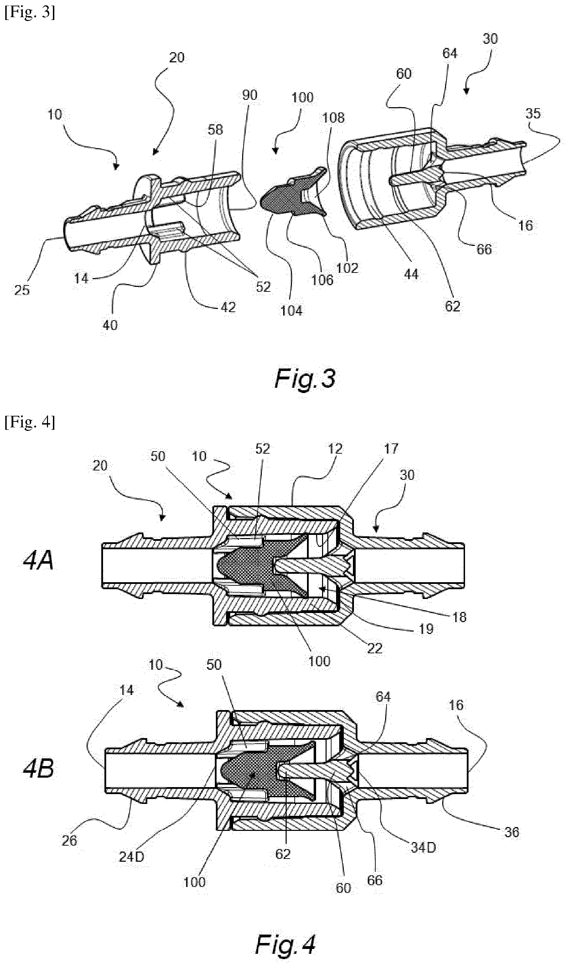

   [Fig.3] représente une vue en perspective et en coupe longitudinale du clapet de la [Fig.1] ;
**Fig.4**
   [Fig.4] représente une vue en coupe longitudinale du clapet dans une configuration d'étanchéité (4A) et dans une configuration d'ouverture fluidique (4B) ;
**Fig.5**

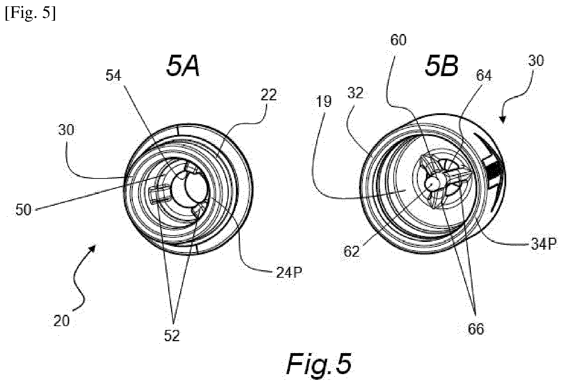

   [Fig.5] représente une vue en perspective d'une extrémité distale d'un connecteur mâle (5A) et d'une extrémité distale d'un connecteur femelle (5B).

### Description des modes de réalisation

On a représenté sur les figures 1 à 5, un clapet anti-retour, désigné dans son ensemble par la référence générale 10 et appelé dans la suite plus simplement « clapet ». Ce clapet 10 est destiné à être monté dans un circuit de fluide d'un dispositif par exemple un dispositif de pulvérisation d'un liquide de lavage sur une surface vitrée d'un véhicule automobile.

Ce clapet 10 comprend un boîtier 12 délimitant un volume interne 18 ([Fig.4]) muni d'une entrée 14 et d'une sortie 16 et définissant un axe principal X d'écoulement entre l'entrée 14 et la sortie 16 d'un fluide au travers du boîtier 12.

Dans la suite de la description, on désignera par « sens passant » (schématisé par la flèche F sur la [Fig.1]) le sens d'écoulement du fluide entre l'entrée 14 et la sortie 16 et par « sens bloqué », le sens d'écoulement opposé.

De préférence, le boîtier 12 comprend un corps composé de premier 20 et deuxième 30 parties assemblées ensemble, suivant l'axe X, ci-après désignés par connecteur d'entrée 20 et connecteur de sortie 30.

Dans cet exemple, les connecteurs 20 et 30 sont configurés pour s'emmancher l'un dans l'autre. Comme cela est illustré sur les figures, le connecteur d'entrée 20 forme le connecteur mâle et le connecteur de sortie 30 forme le connecteur femelle. Les connecteurs 20 et 30 présentent des formes complémentaires d'engagement mutuel délimitant à l'état emmanché le volume intérieur 18 du boîtier 12 ([Fig.4]).

Dans la suite de la description, les termes « axial », « longitudinal » et « radial » sont employés en référence à l'axe principal X. En outre, dans la suite de la description, les termes « proximal » et « distal » sont employés respectivement pour désigner les éléments du connecteur mâle situés du côté du connecteur femelle et du côté opposé au connecteur femelle. Cette désignation est également employée de façon analogue pour les éléments du connecteur femelle en référence à leur position par rapport au connecteur mâle. Ainsi, au sens de la présente description, un élément sera qualifié de proximal ou de distal selon qu'il est respectivement proche ou éloigné axialement d'une zone de couplage des connecteurs mâle 20 et femelle 30.

Comme cela est représenté sur la [Fig.2], le connecteur mâle 20 comprend un corps de boîtier mâle 22 qui définit un passage interne qui s'étend le long de l'axe X et traverse le corps mâle 22 de part en part. De préférence, le corps de boîtier mâle 22 est ici prolongé à partir de l'entrée 14 du boîtier 12 par un embout d'entrée 24 débouchant sur une entrée 25 du clapet 10. Comme cela est visible sur la [Fig.2], le corps de boîtier mâle 22 comprend une extrémité proximale 24P de couplage avec le connecteur femelle 30 et une extrémité distale 24D de raccordement à un conduit de fluide (conduit non représenté sur les figures) par l'intermédiaire de l'embout d'entrée. Par exemple, l'embout d'entrée 24 est configuré pour être emmanché dans un tuyau flexible. En outre, les deux extrémités proximale 24P et distale 24D sont raccordées entre elles par une paroi périphérique 28 délimitant extérieurement le corps de boîtier mâle 22.

De façon analogue, comme cela est représenté sur la [Fig.2], le connecteur femelle 30 comporte un corps de boîtier femelle 32 qui définit un passage interne qui s'étend le long de l'axe X et traverse le corps femelle 30 de part en part. De préférence, le corps de boîtier femelle 32 est ici prolongé à partir de l'entrée 16 du boîtier 12 par un embout de sortie 34 débouchant sur la sortie 35 du clapet 10.

Dans l'exemple décrit, les embouts d'entrée 24 et de sortie 34 s'étendent longitudinalement selon l'axe principal X. Bien entendu, dans une variante non illustrée de l'invention, les embouts d'entrée 24 et de sortie 34 peuvent comprendre une forme coudée ou une forme en T ou encore en Y sans sortir du cadre de l'invention.

Le corps de boîtier femelle 30 comprend une extrémité proximale 36P de couplage avec le connecteur mâle 12 et une extrémité distale 36D de raccordement à un conduit de fluide d'un circuit de transfert de fluide (circuit non représenté sur les figures) par l'intermédiaire de l'embout de sortie. Les deux extrémités 34P et 34D sont raccordées entre elles par une paroi périphérique 38 délimitant extérieurement le corps de boîtier femelle 32.

Dans le mode de réalisation préféré de l'invention, le corps de boîtier femelle 32 est en forme générale de douille et le corps de boîtier mâle 22 est en forme générale de fiche configuré pour s'enficher, jusque dans une position finale de couplage, à l'intérieur du corps de boîtier femelle 32.

A cet effet, comme cela est illustré sur la [Fig.2], le corps de boîtier mâle 22 est pourvu, sur sa paroi périphérique 28, d'une collerette externe annulaire de butée axiale 40 contre laquelle l'extrémité proximale 34P de couplage du connecteur femelle 30 vient en butée selon la direction axiale X lors de leur emmanchement mutuel.

En outre, de préférence, le corps de boîtier mâle 22 est pourvu sur la paroi périphérique 38 d'un bourrelet 42 annulaire d'encliquetage propre à coopérer avec une rainure interne complémentaire 44 formée à l'intérieur du corps de boîtier femelle 32.

Ces connecteurs 20 et 30 sont représentés dans une configuration désaccouplée sur les figures 2 et 3 dans laquelle le connecteur mâle 20 et le connecteur femelle 30 sont éloignés l'un de l'autre et dans une configuration accouplée sur les figures 1 et 4 dans laquelle le connecteur mâle 20 et le connecteur femelle 30 sont enfichés l'un dans l'autre.

Conformément à l'invention, le clapet 10 comprend encore un élément de membrane 100 qui est prévu pour s'étendre, axialement, au moins partiellement à l'intérieur du volume interne 18 du boîtier 12.

En particulier, l'élément de membrane 100 comprend un corps ou enveloppe de forme longitudinale divisé selon une direction longitudinale en au moins deux parties fonctionnelles, une partie proximale 102 de contact avec la paroi interne du volume 18 et une partie distale 104 de guidage et de centrage de l'élément 100 à l'intérieur du volume 18 du boîtier 12.

Le corps de l'élément de membrane 100 présente une section transversale décroissante entre la partie proximale 102 et la partie distale 104. Le corps de l'élément 100 présente par exemple une forme générale de cloche. La partie proximale 102 est élastiquement déformable et configurée pour entrer en contact de manière étanche avec la paroi interne axiale 17 du volume 18 du boîtier.

Selon l'invention, la partie de contact 102 est élastiquement déformable radialement entre une position au repos d'étanchéité par contact contre une région de contact de la paroi axiale 17 du volume 18 du boîtier 12 et une position déformée d'ouverture fluidique dans laquelle le fluide peut s'écouler autour et le long de l'élément de membrane 100, dans le sens passant F entre l'entrée 14 et la sortie 16.

De préférence, comme cela est illustré sur les figures, l'élément de membrane 100 est pourvu dans sa partie distale 104 d'une tête, de forme générale conique, et est prolongée dans sa partie proximale 102 par une jupe annulaire tronconique qui s'évase en direction de la sortie 16.

De préférence, la partie distale 104 est de section transversale pleine et se prolonge par la partie proximale 102 de section transversale creuse conférant un profil à section longitudinale en forme générale de V dans la partie proximale 102.

Dans la position de repos, la partie de contact 102 vient naturellement en contact circonférentiel avec la paroi axiale périphérique interne 17 du volume interne 18 du boîtier 12, dans ladite région de contact, afin de venir créer un contact étanche au fluide de l'élément de membrane 100 avec la paroi périphérique interne 17. Par exemple, le contact de la membrane 100 et de la paroi 17 est réalisé en force.

Dans le sens passant F, l'élément de membrane 100 adopte la position d'ouverture fluidique : la pression du fluide sur la partie de contact 102 dans le sens passant vient déformer la partie de contact 102 qui se replie radialement vers l'intérieur de telle sorte que la partie de contact 102 se décolle de la paroi périphérique 17 permettant au fluide de s'écouler, autour de l'élément de membrane 100.

Au contraire, dans le sens bloqué, c'est-à-dire dans le sens d'écoulement de la sortie 16 vers l'entrée 14, la pression du fluide sur l'élément de membrane 100 vient coller davantage la partie de contact 102 contre la paroi périphérique 17 de sorte que tout reflux de fluide dans le sens contraire au sens passant F est empêché. Dans l'exemple illustré de l'invention, la partie de contact 102 évidée vient se remplir de fluide plaquant davantage la jupe d'étanchéité contre la paroi 17.

Afin de positionner et de maintenir l'élément de membrane 100 à l'intérieur du clapet 10, selon l'invention, le boîtier 12 comprend du côté de l'entrée 14 un siège 50 interne de réception de la partie d'extrémité distale 104 et du côté de la sortie 16 un picot central 60 d'extension axiale configuré pour s'étendre à l'intérieur de la partie d'extrémité proximale 102 de l'élément de membrane 100 de telle sorte que l'élément de membrane 100 est maintenu, immobilisé axialement, de façon centrale contre le siège 50 par le picot central 60.

Avantageusement, comme cela est illustré sur la figure, la partie de contact 102 de l'élément de membrane 100 est de section transversale creuse pour former un évidement 108 conformé pour recevoir axialement le picot 60. Le picot 60 se présente sous la forme d'un doigt pourvu à son sommet d'une portion d'extrémité proximale libre 62 et à sa base d'une portion d'extrémité distale 64 rattachée à une région de la paroi interne du volume 18 du boîtier 12.

Comme cela est visible sur la figure 5B de préférence, la base 64 du doigt 60 est venue de matière avec une paroi transversale 19 du volume 18 qui s'étend transversalement et à l'intérieur de laquelle débouche l'embout de sortie 34.

Par exemple, la base 64 a une configuration en forme d'étoile, avec une pluralité de bras 66 d'extension principalement radiale à espacement égal pour permettre l'écoulement de fluide autour de la base 64 du doigt 60.

Dans l'exemple illustré sur les figures et de façon non limitative, le connecteur d'entrée 20 porte le siège de réception 50 et le connecteur de sortie 30 porte le picot central 60.

Comme illustré sur la figure 5A, le siège annulaire de réception 50 est ici intégré au corps 22 du connecteur mâle 20. Dans l'exemple décrit, le siège annulaire 50 comprend une pluralité de nervures 52 d'extension axiale et en saillie radiale depuis une face de la paroi périphérique interne 17 du volume 18 du boîtier 12. Ces nervures axiales 52 délimitent entre elles un logement annulaire 54 à l'intérieur duquel vient se loger la partie distale 104 de la membrane 100. Ces nervures 52 permettent le guidage longitudinal et le centrage de la membrane 100 à l'intérieur du corps de boîtier 12. Ces nervures 52 formées en relief sur la face interne de la paroi périphérique 17 du volume intérieur 18 du boîtier 12 forment des entretoises qui permettent de maintenir un écart radial entre la paroi interne 17 et l'enveloppe externe de la partie de guidage 104 de la membrane 100.

De préférence, les nervures 52 sont venues de matière avec la paroi interne 17 du volume 18 du boîtier 12, ici la paroi interne du corps de boîtier du connecteur mâle 20.

Dans l'exemple décrit, les nervures 52 sont au nombre de trois. Toutefois, il est bien entendu que le nombre, la forme ou la disposition des nervures 52 n'est nullement limitatif. De préférence, la répartition des nervures 52 est régulière selon la direction circonférentielle.

De préférence, la membrane 100 comprend dans sa partie distale 104 un épaulement périphérique annulaire externe 106 conférant à l'enveloppe de la partie distale 104 un profil extérieur en gradin ou en marche d'escalier.

Lors du montage de la membrane 100 à l'intérieur du logement 54 délimité radialement par les nervures 52, l'épaulement 106 de la membrane 100 vient buter axialement contre les bords d'extrémité des nervures 52.

Dans cet exemple, le diamètre de la section transversale de la partie distale 104 de la membrane 100 est choisi inférieur au diamètre de la section transversale du volume intérieur 18 mais supérieur à la section du logement 54 délimité par les nervures 52.

Ainsi, la membrane 100 vient en butée axiale contre les nervures 52 par son gradin 106 qui vient reposer axialement contre les bords distaux 58 d'extrémité des nervures 52. Les bords 58 forment ensemble une surface d'appui circonférentielle discontinue ce qui permet au fluide de s'écouler autour de la membrane 100 au niveau de la partie de guidage 104.

De préférence, chaque connecteur femelle 30 ou mâle 20 est réalisé dans une matière plastique, par exemple par moulage par injection de la matière plastique.

On va maintenant décrire les principaux aspects de fonctionnement d'un clapet selon l'invention en référence aux figures 1 à 5.

En position de repos de l'élément de membrane 100 du clapet 10, comme l'illustre la figure 4A, une pression de fluide présente du côté de l'embout de sortie 34 (ou une dépression régnant du côté de l'embout d'entrée 24) applique l'élément de membrane 100 contre la région de contact de la paroi interne 17 du volume 18, de sorte que la partie proximale 102 de l'élément de membrane 100 vient obturer l'orifice de passage du boîtier 12, empêchant ainsi tout reflux du fluide.

En position d'ouverture de l'élément de membrane 100, comme l'illustre la figure 4B, la membrane 100 se trouve « décollée » radialement de la région de contact de la paroi 17 et autorise la circulation du fluide, dans un sens dit « passant » (flèche F) depuis l'embout d'entrée 24 vers l'embout de sortie 34 en passant par la périphérie de l'élément de membrane 100.

Lorsque le liquide de lavage s'écoule de l'entrée 14 vers la sortie 16 dans le sens passant F, le liquide force l'ouverture du joint formé dans la région de contact entre l'élément de membrane 100 et le boîtier 12 permettant ainsi au liquide de s'écouler vers la sortie 16. Ainsi, lorsque le liquide s'écoule de l'entrée vers la sortie, le liquide sépare la partie de contact 102 de l'élément de membrane 100 de la région de contact du boîtier 12 et le liquide peut s'écouler.

Lorsque, d'autre part, le liquide tente de s'écouler de la sortie 16 à l'entrée 14, il s'écoule dans l'évidement de l'élément de membrane 100, ce qui force la partie de contact 102 de l'élément de membrane 100 en contact plus fort avec la région de contact du boîtier 12, empêchant ainsi l'écoulement du liquide entre la partie de contact 102 de l'élément de membrane 100 et la région de contact du boîtier 12 et empêchant ainsi l'écoulement de liquide de la sortie 16 de la membrane 100 à l'entrée 14.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Clapet anti-retour (10) pour un circuit de fluide d'un véhicule automobile, comprenant un boîtier (12) délimitant un volume interne (18) muni d'une entrée (14), d'une sortie (16) et définissant un axe principal X d'écoulement du fluide entre l'entrée (14) et la sortie (16) au travers du boîtier (12), un élément de membrane (100), s'étendant au moins partiellement à l'intérieur du volume interne (18) du boîtier (12), l'élément de membrane (100) ayant une partie de contact (102) élastiquement déformable radialement entre une position d'étanchéité dans laquelle la partie de contact (102) vient en contact avec une paroi interne (17) du volume interne (18) et une position d'ouverture fluidique dans laquelle le fluide peut s'écouler de l'entrée (14) vers la sortie (16) autour de l'élément de membrane (100), **caractérisé en ce que** l'élément de membrane (100) présentant axialement une section transversale décroissante entre une partie d'extrémité proximale (102) formant la partie de contact et une partie d'extrémité distale (104) opposée, le boîtier (12) comprend du côté de l'entrée (14) un siège interne (50) de réception de la partie distale (104) et du côté de la sortie (16) un picot (60) d'extension axiale configuré pour s'étendre à l'intérieur de la partie proximale (102) de l'élément de membrane (100) de telle sorte que l'élément de membrane (100) est immobilisé axialement entre le siège (50) et le picot (60).

2. Clapet (10) selon la revendication précédente, dans lequel le boîtier (12) comprend un connecteur d'entrée (20) et un connecteur de sortie (30) configurés pour s'emmancher l'un dans l'autre en délimitant le volume interne (18) du boîtier (12), le connecteur d'entrée (20) comprend le siège (50) et le connecteur de sortie (30) comprend le picot (60).

3. Clapet (10) selon la revendication précédente, dans lequel le siège (50) est intégré au connecteur d'entrée (20) et le picot (60) est intégré au connecteur de sortie (30), par exemple en étant chacun venu de matière par moulage d'une matière plastique.

4. Clapet (10) selon l'une quelconque des revendications précédentes, dans lequel la partie proximale (102) de l'élément de membrane (100) est de section transversale creuse pour former un évidement (108) conformé pour recevoir axialement le picot (60) conférant un profil à section longitudinale en forme générale de V.

5. Clapet (10) selon l'une quelconque des revendications précédentes, dans lequel la partie distale (104) de l'élément de membrane (100) est de section transversale pleine, par exemple la partie distale (104) avec un embout d'extrémité avec une forme générale conique.

6. Clapet (10) selon l'une quelconque des revendications précédentes, dans lequel l'élément de membrane (100) a une forme générale de cloche qui s'évase depuis la partie distale (104) jusqu'à la partie proximale (102).

7. Clapet (10) selon l'une quelconque des revendications précédentes, dans lequel le picot (60) comprend une base (64) venue de matière avec une paroi interne (19) du volume interne (18) du boîtier (12), la base (64) ayant une configuration en forme d'étoile, en particulier avec une pluralité de bras (66) d'extension principalement radiale à espacement égal pour permettre l'écoulement de fluide autour de la base du picot (60).

8. Clapet (10) selon l'une quelconque des revendications précédentes, dans lequel le siège (50) comprend une surface d'appui axial circonférentielle et la partie distale (104) comprend un épaulement périphérique extérieur qui vient reposer axialement contre la surface d'appui.

9. Clapet (10) selon la revendication précédente, dans lequel le siège (50) comprend une pluralité de nervures axiales (52), en saillie radiale depuis une paroi axiale (17) du volume interne (18), pourvues chacune d'un bord d'extrémité proximale (58) qui forment ensemble une surface d'appui circonférentielle discontinue pour la partie distale (104) de l'élément de membrane (100).

10. Clapet (10) selon la revendication précédente, dans lequel la répartition des nervures (52) est régulière selon la direction circonférentielle.

11. Clapet (10) selon l'une quelconque des revendications précédentes, dans lequel chaque connecteur femelle (30) ou mâle (20) est réalisé dans une matière plastique, par exemple par moulage par injection de la matière plastique.

12. Dispositif de pulvérisation pour distribuer de l'eau de lavage sur une surface vitrée d'un véhicule automobile comprenant un clapet anti-retour **caractérisé en ce que** le clapet (10) est selon l'une quelconque des revendications précédentes.
